# EUROPEAN PATENT SPECIFICATION

(11) **EP 1 934 664 B1**
(45) Date of publication and mention of the grant of the patent: **13.06.2012**
(21) Application number: 06803783.7
(22) Date of filing: 18.09.2006
(51) Int. Cl.: G05D 7/01, G05D 16/02

(54) **VIBRATION DAMPER APPARATUS FOR USE WITH FLUID CONTROL DEVICES**
VIBRATIONSDÄMPFERVORRICHTUNG ZUR VERWENDUNG MIT FLÜSSIGKEITSSTEUERUNGSVORRICHTUNGEN
APPAREIL D'AMORTISSEMENT DES VIBRATIONS POUR DISPOSITIFS DE CONTRÔLE DE FLUIDE

(30) Priority: 07.10.2005 US 246538
(43) Date of publication of application: 25.06.2008
(73) Proprietor: FISHER CONTROLS INTERNATIONAL LLC, St. Louis, MO 63136 (US)
(72) Inventor: DURANT, Tont, Alan, Mckinney, TX 75071 (US); DAAKE, Sheryl, Lynne, Mckinney, TX 75070 (US); HANUSA, Matthew, W., Mckinney, TX 75071 (US); VANDE WAERDT, Nicholas, Dean, Rock Rapids, IA 51246 (US); PETERSON, Coleen, R., Hollandale, MN 56045 (US)
(74) Representative: Bohnenberger, Johannes
(86) International application number: PCT/US2006/036303
(87) International publication number: WO 2007/044182

(56) References cited:
- FR-A- 2 220 166
- US-A- 3 972 346
- US-A- 6 029 694
- US-A1- 2002 079 649

## Description

### FIELD OF THE DISCLOSURE

The present disclosure relates generally to fluid control devices and, more specifically, to a vibration damper apparatus for use with fluid control devices.

### BACKGROUND

Process plants often employ fluid pressure regulators to control the pressure and/or flow of process fluids. One commonly used type of fluid pressure regulator is a direct-operated reducing regulator. Such direct-operated regulators typically have an inlet carrying a relatively high pressure fluid (e.g., a liquid, gas, steam, etc.) that is regulated to a lower pressure at an outlet. In many direct-operated regulators, a spring-biased diaphragm is coupled to a plug or other movable fluid flow control member and is exposed to the pressure of the fluid in a chamber connecting the inlet and outlet.

Movements of the spring-biased diaphragm cause the plug or other fluid flow control member to move into or away from an opening or seat disposed between the inlet and the chamber. More specifically, as the pressure in the chamber and, thus, the outlet, increases, the diaphragm causes the fluid flow control member to restrict or shut-off the flow of fluid from the inlet into the chamber, which tends to decrease the pressure in the chamber and the outlet. Conversely, as pressure in the chamber and the outlet decreases, the diaphragm causes the fluid flow control member to reduce the restriction of fluid flow from the inlet into the chamber, which tends to increase the pressure in the chamber and the outlet. By varying the amount of spring bias applied to the diaphragm, the pressure equilibrium, control point, or set-point of the regulator can be set to achieve a desired outlet pressure that remains substantially constant despite variations in inlet pressure.

In certain fluid control applications, the outlet pressure of some direct-operated pressure regulators may vary (e.g., drift or shift) or become unstable (e.g., oscillate). One particularly problematic fluid control application requires a sanitary regulator design. Sanitary regulator applications such as, for example, food and beverage processing, pharmaceutical applications, biotechnology applications, etc. often require a regulator that facilitates in-place, thorough cleaning of the internal components of the regulator in contact with the controlled fluid. As a result, many sanitary regulator designs utilize a diaphragm that is completely exposed to the flow path of the controlled fluid, thereby minimizing the number of crevices or other areas that may prove difficult to clean during an in-place cleaning operation. However, such complete exposure of the diaphragm to the controlled fluid subjects the entire diaphragm area to the often turbulent flow conditions that are present within a regulator. As a result, the diaphragm may be overly responsive to the flow turbulence and, thus, cause undesirable fluctuations in the position or instability of the flow control member (e.g., the plug) and, thus, outlet pressure of the regulator.

Some known fluid regulators incorporate vibration dampers to reduce undesirable fluctuations and/or instabilities of the flow control member and output pressure. Some of these known vibration dampers are configured as a bushing or seal that surrounds and frictionally engages a shaft or stem that is coupled to a plug or other flow control member. This frictional engagement reduces the sensitivity of the regulator to flow turbulence and/or other sources of vibration that could aversely affect output pressure regulation. Another known vibration damper utilizes an o-ring disposed between a regulator housing and lower spring seat. However, many of these know vibration dampers require the use of a lubricant, which is undesirable in sanitary regulator applications because lubricants can attract and retain dirt and other debris making it difficult or impossible to clean the regulator to the degree needed to satisfy the cleanliness requirements of these applications. Further, many of these known vibration dampers have frictional and, thus, damping characteristics that vary significantly with temperature, thereby making it difficult to ensure accurate and stable regulation in applications that expose the regulator to relatively high and/or widely varying temperatures. A relevant prior art fluid controller is disclosed in document FR 2.220.166.

### BRIEF DESCRIPTION OF THE DRAWINGS

FIG. 1 is a cross-sectional view of an example pressure regulator having an example vibration damper apparatus constructed in accordance with the teachings of this disclosure.

FIG. 2 is an enlarged cross-sectional view of the example vibration damper apparatus shown in FIG. 1.

FIG. 3 is a perspective view of a portion of the example vibration damper shown in FIGS. 1 and 2.

### SUMMARY

The current invention is defined by independent claim 1.

In one example embodiment, a fluid control device includes a housing and a piston having an outer circumferential surface and configured to be responsive to pressure within the housing to control the position of a fluid flow control member within the housing. The fluid control device also includes a guide ring coupled to the housing and having an opening configured to receive at least a portion of the piston, and a vibration damper disposed between the guide ring and the piston to frictionally engage the outer circumferential surface of the piston.

In another example embodiment, a vibration damping apparatus for use within a fluid control device includes a guide ring having an inner circumferential surface, an outer circumferential surface, and a lip extending away from the outer circumferential surface and configured to be clamped between portions of a fluid control device. The guide ring also includes a seat integral with the inner circumferential surface, wherein the seat is configured to hold a compliant ring in frictional engagement with a piston or a movable spring seat.

### DETAILED DESCRIPTION

The example vibration damper apparatus described herein may be advantageously used within fluid pressure regulators (e.g., reducing regulators, backpressure regulators, etc.) to reduce or eliminate vibration or turbulence induced output pressure fluctuations, oscillations, instabilities, etc. More specifically, the example vibration damper apparatus described herein includes a vibration damper, a compliant ring or other vibration damping member that frictionally engages a piston and/or a movable spring seat that, in turn, is coupled to a movable flow control member (e.g., a plug) within a pressure regulator. In the disclosed example, the vibration damper, compliant ring or other vibration damping member includes a spring core that is surrounded at least partially by a polymer jacket, cover or coating. The spring core and jacket cooperate to apply a relatively or substantially constant fictional force to a surface of the piston or movable spring seat over a relatively wide range of temperatures. Further, in contrast to some known vibration damping apparatus, the polymer jacket eliminates the need for lubrication of the vibration damping member, which eliminates the accumulation of dirt and debris, as well as other problems, associated with the use of lubricants within regulators, and particularly regulators for use in sanitary applications.

In contrast to some known vibration damping apparatus, the example vibration damper apparatus disclosed herein also includes a guide ring having a bore or opening that receives the piston or movable spring seat. In the disclosed example, the guide ring is disposed between a housing of the regulator and an outer circumferential surface of the piston or movable spring seat and includes a seat or other suitable structure to hold the compliant ring or other vibration damping member in frictional engagement with the outer circumferential surface of the piston or movable spring seat.

In the disclosed example, the guide ring also includes a circumferential outer lip that is clamped between an upper or first housing portion (e.g., a spring case) and a lower or second housing portion (e.g., a body). In addition to fixing the guide ring to the housing of the regulator, the outer lip of the guide ring also facilitates the secure clamping of a diaphragm to the regulator housing. Still further, in the disclosed example, the guide ring includes an integral stop to limit the travel of the piston or movable spring seat to prevent excessive diaphragm movement or travel.

While the example vibration damper apparatus is described herein in connection with a sanitary regulator application, the vibration damper apparatus, as well the as the teachings associated therewith, can alternatively be used in connection with any other type of regulator, valve, or more generally, fluid control devices to reduce or eliminate undesirable fluctuations, oscillations, and/or any other variations in output pressure and/or flow.

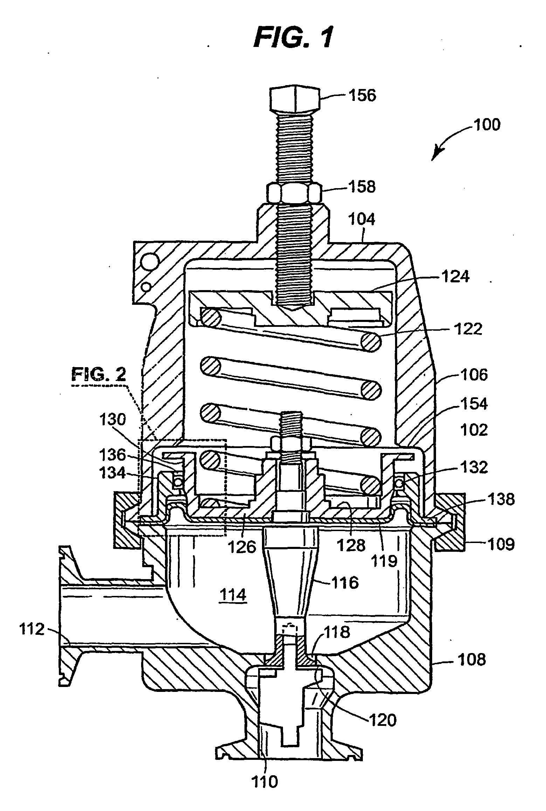

Now turning in detail to FIG. 1, which is a cross-sectional view of an example pressure regulator 100 having an example vibration damper apparatus 102 constructed in accordance with the teachings of this disclosure. The example pressure regulator 100 of FIG. 1 is configured for use in sanitary fluid control applications and, thus, is configured to control or regulate the pressure and/or flow of a process liquid, gas, etc. associated with a process that requires a sanitary condition within the regulator 100. For example, the regulator 100 may be configured to control the pressure and/or flow of a fluid associated with a food processing plant, a pharmaceutical plant, or any other type of process or processing plant involving fluids requiring sanitary conditions within the regulator 100.

The example regulator 100 includes a housing 104 having a first or upper portion 106, which may be generally referred to as a spring case, and a second or lower portion 108, which may generally be referred to as a body. The first and second portions 106 and 108 may be held together via a clamp 109 or using any other suitable fastening mechanism or technique. The body 108 defines an inlet 110 and an outlet 112, both of which are fluidly coupled to a chamber 114. A movable flow control member 116, which in this example is depicted as a plug, is disposed within the body 108 portion of the regulator 102 and is movable relative to an opening or seat 118 at the interface between the inlet 110 and the chamber 114 to control the flow of fluid of fluid into and, thus, the pressure in the chamber 114. A diaphragm 119 is coupled to the plug 116 and is exposed to the pressurized fluid in the chamber 114. As will be described in greater detail below, as the pressure of the fluid in the chamber 114 changes, the diaphragm 119 is urged toward or away from the seat 118 to cause the plug 116 to increase or reduce a gap 120 between the seat 118 and the plug 116 to regulate the flow of fluid into and, thus, the pressure in the chamber 114 and at the outlet 112.

The regulator 100 further includes a spring 122 that is disposed between an upper spring seat 124 and a piston 126, which includes a second or lower spring seat 128. The piston 126 includes structural features configured to perform multiple functions. More specifically, the piston 126 includes the seat 128 to receive and capture an end of the spring 122. Additionally, the piston 126 is fixed to the plug 116 and provides a rigid backing to the diaphragm 119 and, thus, enables the sensing surface of the diaphragm 119 to remain substantially flat during operation of the regulator 100. In this manner, the displacement of the piston 126 is substantially linearly responsive or related to pressure within the housing 104 (e.g., within the chamber 114) to control the position of the plug 116 relative to the seat 118. The piston 126 also has an outer circumferential surface 130 which, as described in greater detail below, frictionally engages a vibration damper 132.

The example vibration damper apparatus 102 includes a guide ring 134 that has an opening 136, which is configured to receive at least a portion of the piston 126. The guide ring 134 includes a circumferential lip 138 that extends away from the opening 136 and which is configured to be clamped or captured between the portions 106 and 108 of the housing 104. The lip 138 also provides a relatively large flat surface that serves to securely clamp the diaphragm 119 between the housing portions 106 and 108 to minimize or prevent the possibility of the diaphragm 119 pulling out from between the housing portions 106 and 108 and/or fluid leaking from the chamber 114 around the diaphragm 119 and into the spring case or upper housing 106.

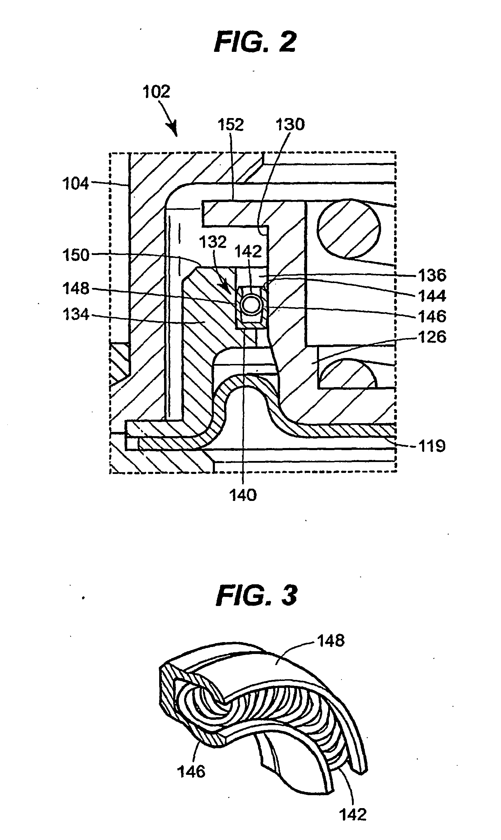

With reference to FIG. 2, which depicts an enlarged cross-sectional view of the vibration damper apparatus 102 of FIG. 1, the guide ring 134 includes a seat 140 within the opening 136 to hold the vibration damper 132 between the piston 126 and the guide ring 134 so that the vibration damper 132 is in a controlled frictional engagement with the outer circumferential surface 130 of the piston 126. FIG. 3 is a perspective cross-sectional view of a portion of the example vibration damper 132 shown in FIGS. 1 and 2.

In the example shown herein, the vibration damper 132 includes a core bias member 142 that is at least partially surrounded by a self-lubricating jacket, cover, or sheath 144. In one example, the bias member 142 is a spring that is configured to drive or urge sides 146 and 148 of the jacket 144 outward, thereby causing the side 146 to frictionally engage the surface 130. Continuing with this example, the jacket 144 is made of a polymer material that enables the vibration damper 132 to engage the surface 130 of the piston 126 with a desired and controlled amount of friction over a relatively wide range of temperatures. One commercially available product that may be used to implement the vibration damper 132 is the OmniSeal product provided by Saint-Gobain, Performance Plastics, of Garden Grove, California. In particular, the OmniSeal APS seal, design type 750, may be used to implement the vibration damper 132. However, other types of seals or dampers could be used instead. More generally, the vibration damper 132 may be implemented using any compliant ring-shaped component that provides an amount of frictional engagement with the piston 126 suitable to substantially eliminate spurious or other unwanted movements or vibrations of the piston 126 and, thus, perturbations to the controlled output pressure of the regulator 100.

While the particular example described herein, describes the vibration damper 132 as being implemented using a commercially available seal, the vibration damper 132 is not exposed to the pressurized fluid controlled by the regulator 100 and, thus, there is substantially no ambient fluid pressure differential applied to the vibration damper 132 during operation of the regulator 100. In other words, although the described example uses a commercially available seal to implement the vibration damper 132, the vibration damper 132 is not configured to perform a sealing function but, instead, is configured to apply a controlled amount of friction to the piston 126 to reduce or eliminate the vibrations and/or other spurious movements of the piston 126 during operation of the regulator 100. As a result, the vibration damper 132 reduces or eliminates undesirable fluctuations (e.g., oscillations) of the pressure in the chamber 114 (FIG. 1) and, thus, the controlled output pressure of the regulator 100 (FIG. 1).

Referring to FIG. 2, the guide ring 134 also includes a stop surface or portion 150 that is configured to engage an outwardly extending lip 152 of the piston 126 to limit the movement or travel of the piston 126 toward the seat 118. As can be seen in FIG. 1, the movement or travel of the piston 126 away from the seat 118 is similarly limited by a surface 154 within the spring case 106 portion of the housing 104.

Prior to and/or during operation of the regulator 100, the spring 122 is preloaded by adjusting a bolt 156 that sets the position of the upper spring seat 124. In particular, turning the bolt 156 clockwise moves the upper spring seat 124 toward the lower spring seat 128 and tends to increase the regulated pressure output by the regulator 100. Conversely, turning the bolt 156 counter-clockwise moves the upper spring seat 124 away from the lower spring seat 128 and tends to decrease the regulated pressure output by the regulator 100. In any case, the bolt 156 is used to set the regulated output pressure of the regulator 100. After adjusting the bolt 156, a locknut 158 may be counter-tightened against the housing to ensure that the position of the bolt 156 and, thus, that the regulated output pressure (i.e., the set-point) does not change after it has been set or adjusted.

During operation of the regulator 100, the diaphragm 119 and, thus, the piston 126 and the plug 116, are responsive to pressure changes in the chamber 114. Specifically, when the pressure in the chamber 114 increases from the equilibrium or set-point pressure, the diaphragm 119, the piston 126, and the plug 116 move toward the upper spring seat 124. This movement tends to decrease the gap 120 between the plug 116 and the seat 118, which tends to decrease the flow into the chamber 114 and, as a result, the pressure in the chamber 114. Conversely, when the pressure in the chamber 114 decreases from the equilibrium or set-point pressure, the diaphragm 119, the piston 126, and the plug 116 move away from the upper spring seat 124. This movement tends to increase the gap 120 between the plug 116 and the seat 118, which tends to increase the flow into the chamber 114 and, as a result, the pressure in the chamber 114. Such direct-operating control is well-known to those of ordinary skill in the art.

In contrast to many known regulators, the vibration damper apparatus 102 includes the vibration damper 132, which is frictionally engaged with the outer circumferential surface 130 of the piston 126. Due to the selection, arrangement, and configuration of the components of the vibration damper apparatus 102, the frictional forces applied to the piston 126 remain substantially controlled or constant over a wide temperature range and without the use of any lubricants on the vibration damper 132 and/or the surface 130 of the piston 126. Further, the magnitude of the frictional forces applied to the surface 130 of the piston 126 are selected to minimize or eliminate the sensitivity of the diaphragm 119 and piston 126 to vibrations of the regulator 100 and/or spurious pressure changes or other transient pressure changes within the chamber 114. As a result, the controlled output pressure of the regulator 100 can remain substantially constant and unaffected by such vibrations and pressure changes or fluctuations.

Although certain apparatus, methods, and articles of manufacture have been described herein, the scope of coverage of this patent is not limited thereto. To the contrary, this patent covers all embodiments fairly falling within the scope of the appended claims.

## Claims

1. A fluid control device, comprising:
a housing;
a piston (126) having an outer circumferential surface (130) and configured to be responsive to pressure within the housing to control the position of a fluid flow control member (116) within the housing;
a guide ring (134) coupled to the housing and having an opening configured to receive at least a portion of the piston; and
a vibration damper (132) disposed between the guide ring and the piston,
**characterised in that**
the vibration damper (132) is slidably coupled to the outer circumferential surface (130) of the piston (126) such that the vibration damper (132) frictionally engages the piston (126).

2. A fluid control device as defined in claim 1, wherein the vibration damper is isolated from an ambient fluid pressure differential by a diaphragm so that, in operation, substantially no ambient fluid pressure differential is applied to the vibration damper.

3. A fluid control device as defined in claim 1, wherein the vibration damper is isolated from a fluid controlled by the fluid control device by a diaphragm so that, in operation, the vibration damper is not exposed to the fluid controlled by the fluid control device.

4. A fluid control device as defined in claim 1, wherein the guide ring comprises a circumferential lip configured to be clamped between portions of the housing.

5. A fluid control device as defined in claim 1, wherein the fluid control device is a pressure regulator.

6. A fluid control device as defined in claim 1, wherein the pressure regulator is a sanitary regulator.

7. A fluid control device as defined in claim 1, wherein the fluid flow control member comprises a plug.

8. A fluid control device as defined in claim 1, wherein the vibration damper comprises a spring at least partially surrounded by a polymer jacket.

9. A fluid control device as defined in claim 1, wherein the guide ring comprises a stop to limit the travel of the piston.

10. A fluid control device as defined in claim 1, wherein the piston is configured to provide a seat for a spring.

11. A fluid control device as defined in claim 1, wherein the guide ring comprises a seat within the opening to hold the vibration damper.

12. A fluid control device as defined in claim 8, wherein the vibration damper is isolated from a fluid controlled by the fluid control device by a diaphragm within the housing so that, in operation, the vibration damper is substantially not exposed to the fluid controlled by the fluid control device.

13. A fluid control device as defined in claim 8, further comprising a guide ring having an opening configured to receive at least a portion of the piston.

14. A fluid control device as defined in claim 13, wherein the guide ring comprises a circumferential lip configured to be clamped between portions of the housing.

15. A fluid control device as defined in claim 13, wherein the guide ring holds the vibration damper in frictional engagement with the outer circumferential surface of the piston.

16. A fluid control device as defined in claim 8, wherein the fluid control device is a pressure regulator.

17. A fluid control device as defined in claim 8, wherein the piston is configured to provide a seat for a spring.

18. A fluid control device as defined in claim 1, wherein the guide ring further comprises:
an inner circumferential surface, an outer circumferential surface, a lip extending away from the outer circumferential surface and configured to be clamped between portions of a fluid control device, and a seat integral with the inner circumferential surface, wherein the seat is configured to hold a compliant ring in frictional engagement with a piston or a movable spring seat.

19. A fluid control device as defined in claim 18, wherein the seat and the compliant ring are isolated from a fluid controlled by the fluid control device by a diaphragm so that, in operation, the compliant ring is substantially not exposed to the fluid controlled by the fluid control device.

20. A fluid control device as defined in claim 18, wherein the guide ring comprises a surface to limit the travel of the piston or the movable spring seat.

21. A fluid control device as defined in claim 18, wherein the compliant ring comprises a spring.

22. A fluid control device as defined in claim 18, wherein the compliant ring comprises a polymer jacket.

## Patentansprüche

1. Fluidregelungsvorrichtung, welches Folgendes aufweist:
ein Gehäuse;
einen Kolben (126), der eine Außenumfangsfläche (130) aufweist und dazu ausgelegt ist, auf Druck im Inneren des Gehäuses anzusprechen, um die Position eines Fluiddurchflussreglers (116) im Inneren des Gehäuses zu regeln;
einen Führungsring (134), der mit dem Gehäuse verbunden ist und eine Öffnung aufweist, die dazu ausgelegt ist, zumindest einen Teil des Kolbens aufzunehmen; und
einen Schwingungsdämpfer (132), der zwischen dem Führungsring und dem Kolben angeordnet ist,
**dadurch gekennzeichnet, dass**
der Schwingungsdämpfer (132) gleitbeweglich mit der Außenumfangsfläche (130) des Kolbens (126) derart verbunden ist, dass der Schwingungsdämpfer (132) reibschlüssig am Kolben (126) angreift.

2. Fluidregelungsvorrichtung nach Anspruch 1, wobei der Schwingungsdämpfer durch eine Membran von einer Umgebungsfluiddruckdifferenz getrennt ist, so dass im Betrieb im Wesentlichen keine Umgebungsfluiddruckdifferenz am Schwingungsdämpfer anliegt.

3. Fluidregelungsvorrichtung nach Anspruch 1, wobei der Schwingungsdämpfer durch eine Membran von einem durch die Fluidregelungsvorrichtung geregelten Fluid getrennt ist, so dass der Schwingungsdämpfer im Betrieb dem durch die Fluidregelungsvorrichtung geregelten Fluid nicht ausgesetzt ist.

4. Fluidregelungsvorrichtung nach Anspruch 1, wobei der Führungsring eine umlaufende Lippe umfasst, die dazu ausgelegt ist, zwischen Teilen des Gehäuses festgeklemmt zu sein.

5. Fluidregelungsvorrichtung nach Anspruch 1, wobei die Fluidregelungsvorrichtung ein Druckregler ist.

6. Fluidregelungsvorrichtung nach Anspruch 1, wobei der Druckregler ein sanitärtechnischer Regler ist.

7. Fluidregelungsvorrichtung nach Anspruch 1, wobei das Fluidströmungsregelungsteil einen Stopfen aufweist.

8. Fluidregelungsvorrichtung nach Anspruch 1, wobei der Schwingungsdämpfer eine Feder aufweist, die zumindest teilweise von einem Polymermantel umgeben ist.

9. Fluidregelungsvorrichtung nach Anspruch 1, wobei der Führungsring einen Anschlag aufweist, um den Hub des Kolbens zu begrenzen.

10. Fluidregelungsvorrichtung nach Anspruch 1, wobei der Kolben dazu ausgelegt ist, einen Sitz für eine Feder bereitzustellen.

11. Fluidregelungsvorrichtung nach Anspruch 1, wobei der Führungsring einen Sitz im Inneren der Öffnung aufweist, um den Schwingungsdämpfer zu halten.

12. Fluidregelungsvorrichtung nach Anspruch 8, wobei der Schwingungsdämpfer durch eine Membran im Inneren des Gehäuses von einem durch die Fluidregelungsvorrichtung geregelten Fluid getrennt ist, so dass der Schwingungsdämpfer im Betrieb dem durch die Fluidregelungsvorrichtung geregelten Fluid im Wesentlichen nicht ausgesetzt ist.

13. Fluidregelungsvorrichtung nach Anspruch 8, welche weiterhin einen Führungsring mit einer Öffnung aufweist, wobei die Öffnung dazu ausgelegt ist, zumindest einen Teil des Kolbens aufzunehmen.

14. Fluidregelungsvorrichtung nach Anspruch 13, wobei der Führungsring eine umlaufende Lippe aufweist, die dazu ausgelegt ist, zwischen Teilen des Gehäuses festgeklemmt zu sein.

15. Fluidregelungsvorrichtung nach Anspruch 13, wobei der Führungsring den Schwingungsdämpfer reibschlüssig an der Außenumfangsfläche des Kolbens hält.

16. Fluidregelungsvorrichtung nach Anspruch 8 wobei die Fluidregrlungsvorrichtung ein Druckregler ist.

17. Fluidregelungsvorrichtung nach Anspruch 8, wobei der Kolben dazu ausgelegt ist, einen Sitz für eine Feder bereitzustellen.

18. Fluidregelungsvorrichtung nach Anspruch 1, wobei der Führungsring weiterhin Folgendes aufweist:
eine Innenumfangsfläche, eine Außenumfangsfläche, eine Lippe, die sich von der Außenumfangsfläche weg erstreckt und dazu ausgelegt ist, zwischen Teilen einer Fluidregelungsvorrichtung festgeklemmt zu sein, und einen mit der Innenumfangsfläche einstückigen Sitz, wobei der Sitz dazu ausgelegt ist, einen nachgiebigen Ring in reibschlüssigem Angriff an einem Kolben oder einem beweglichen Federsitz zu halten.

19. Fluidregelungsvorrichtung nach Anspruch 18, wobei der Sitz und der nachgiebige Ring durch eine Membran von einem durch die Fluidregelungsvorrichtung geregelten Fluid getrennt sind, so dass der nachgiebige Ring im Betrieb dem durch die Fluidregelungsvorrichtung geregelten Fluid im Wesentlichen nicht ausgesetzt ist.

20. Fluidregelungsvorrichtung nach Anspruch 18, wobei der Führungsring eine Fläche zum Begrenzen des Hubs des Kolbens oder des beweglichen Federsitzes aufweist.

21. Fluidregelungsvorrichtung nach Anspruch 18, wobei der nachgiebige Ring eine Feder aufweist.

22. Fluidregelungsvorrichtung nach Anspruch 18, wobei der nachgiebige Ring einen Polymermantel aufweist.

## Revendications

1. Dispositif de commande de fluide, comprenant :
un boîtier ;
un piston (126) ayant une surface circonférentielle extérieure (130) et configuré pour être sensible à une pression existant dans le boîtier pour commander la position d'un élément de commande d'écoulement de fluide (116) dans le boîtier ;
une bague de guidage (134) reliée au boîtier et ayant une ouverture configurée pour recevoir au moins une partie du piston ; et
un amortisseur de vibrations (132) disposé entre la bague de guidage et le piston,
**caractérisé en ce que**
l'amortisseur de vibrations (132) est relié de manière coulissante à la surface circonférentielle extérieure (130) du piston (126) de sorte que l'amortisseur de vibrations (132) est en contact avec frottement avec le piston (126).

2. Dispositif de commande de fluide selon la revendication 1, dans lequel l'amortisseur de vibrations est isolé d'un différentiel de pression de fluide ambiant par une membrane de sorte que, en fonctionnement, sensiblement aucun différentiel de pression de fluide ambiant n'est appliqué à l'amortisseur de vibrations.

3. Dispositif de commande de fluide selon la revendication 1, dans lequel l'amortisseur de vibrations est isolé d'un fluide commandé par le dispositif de commande de fluide par une membrane de sorte que, en fonctionnement, l'amortisseur de vibrations n'est pas exposé au fluide commandé par le dispositif de commande de fluide.

4. Dispositif de commande de fluide selon la revendication 1, dans lequel la bague de guidage comprend une lèvre circonférentielle configurée pour être serrée entre des parties du boîtier.

5. Dispositif de commande de fluide selon la revendication 1, dans lequel le dispositif de commande de fluide est un régulateur de pression.

6. Dispositif de commande de fluide selon la revendication 1, dans lequel le régulateur de pression est un régulateur sanitaire.

7. Dispositif de commande de fluide selon la revendication 1, dans lequel l'élément de commande d'écoulement de fluide comprend un obturateur.

8. Dispositif de commande de fluide selon la revendication 1, dans lequel l'amortisseur de vibrations comprend un ressort au moins partiellement entouré par une enveloppe de polymère.

9. Dispositif de commande de fluide selon la revendication 1, dans lequel la bague de guidage comprend une butée pour limiter le trajet du piston.

10. Dispositif de commande de fluide selon la revendication 1, dans lequel le piston est configuré pour fournir un siège pour un ressort.

11. Dispositif de commande de fluide selon la revendication 1, dans lequel la bague de guidage comprend un siège situé dans l'ouverture pour supporter l'amortisseur de vibrations.

12. Dispositif de commande de fluide selon la revendication 8, dans lequel l'amortisseur de vibrations est isolé d'un fluide commandé par le dispositif de commande de fluide par une membrane située dans le boîtier de sorte que, en fonctionnement, l'amortisseur de vibrations n'est sensiblement pas exposé au fluide commandé par le dispositif de commande de fluide.

13. Dispositif de commande de fluide selon la revendication 8, comprenant de plus une bague de guidage ayant une ouverture configurée pour recevoir au moins une partie du piston.

14. Dispositif de commande de fluide selon la revendication 13, dans lequel la bague de guidage comprend une lèvre circonférentielle configurée pour être serrée entre des parties du boîtier.

15. Dispositif de commande de fluide selon la revendication 13, dans lequel la bague de guidage maintient l'amortisseur de vibrations en contact avec frottement avec la surface circonférentielle extérieure du piston.

16. Dispositif de commande de fluide selon la revendication 8, dans lequel le dispositif de commande de fluide est un régulateur de pression.

17. Dispositif de commande de fluide selon la revendication 8, dans lequel le piston est configuré pour fournir un siège pour un ressort.

18. Dispositif de commande de fluide selon la revendication 1, dans lequel la bague de guidage comprend de plus :
une surface circonférentielle intérieure, une surface circonférentielle extérieure, une lèvre s'étendant en s'éloignant de la surface circonférentielle extérieure et configurée pour être serrée entre des parties d'un dispositif de commande de fluide; et un siège d'un seul bloc avec la surface circonférentielle intérieure, le siège étant configuré pour supporter un bague souple en contact avec frottement avec un piston ou un siège pour ressort mobile.

19. Dispositif de commande de fluide selon la revendication 18, dans lequel le siège et la bague souple sont isolés d'un fluide commandé par le dispositif de commande de fluide par une membrane de sorte que, en fonctionnement, la bague souple n'est sensiblement pas exposée au fluide commandé par le dispositif de commande de fluide.

20. Dispositif de commande de fluide selon la revendication 18, dans lequel la bague de guidage comprend une surface pour limiter le trajet du piston ou du siège pour ressort mobile.

21. Dispositif de commande de fluide selon la revendication 18, dans lequel la bague souple est constituée d'un ressort.

22. Dispositif de commande de fluide selon la revendication 18, dans lequel la bague souple est constituée d'une enveloppe en polymère.
